# EUROPEAN PATENT APPLICATION

(11) **EP 2 099 242 A2**
(43) Date of publication of application: **09.09.2009**
(21) Application number: 09003310.1
(22) Date of filing: 06.03.2009
(51) Int. Cl.: H04W 8/06, H04M 15/00, H04Q 3/00

(54) **Single IMSI Multi MSISDN service allocating a local number to a roaming subscriber**

(30) Priority: 06.03.2008 CN 200810065807; 09.02.2009 WO PCT/CN2009/070382
(71) Applicant: Huawei Technologies Co., Ltd., Shenzhen, Guangdong Province 518129 (CN)
(72) Inventor: Zhou, Wen, Shenzhen Guangdong Province 518129 (CN)
(74) Representative: Pfenning, Meinig & Partner GbR

(57) **Abstract**

The application relates to a Single IMSI Multi MSISDN service which allocates a local number to a roaming subscriber for making an receiving local calls. When the Single IMSI Multi MSISDN subscriber makes an outgoing call, the system automatically selects the local number attached to the visited location as the calling line identification, thereby providing an automatic rather than a manual selection. When the Single IMSI Multi MSISDN subscriber receives a call addressed to its primary MSISDN, the system automatically selects the local number attached to the visited location as the billing identification, thereby avoiding roaming costs. For making local calls the system makes use of Originating CAMEL Subscription Information (401) and for receiving local calls the System makes use of Terminating CAMEL Subscription Information (703).

## Description

### CALL FLOW PROCESSING METHOD AND APPARATUS THEREOF

This application claims priorities from Chinese Patent Application No. 200810065807.8, entitled "CALL FLOW PROCESSING METHOD AND APPARATUS THEREOF", filed with the Chinese Patent Office on March 06, 2008, and PCT Application PCT/CN2009/070382, which are hereby incorporated by reference in their entireties.

### FIELD OF THE INVENTION

The present invention relates to the field of communication technologies, and in particular to a call flow processing method and apparatus thereof.

### BACKGROUND OF THE INVENTION

With the rapid development of mobile communication techniques, ranges of communication are becoming larger and larger. Due to the extending of the communication ranges and diversity of the communication purposes, more and more persons possess multiple cell phone numbers, and each number may be used for a different purpose. Nevertheless, use of multiple cell phone numbers makes the user inconvenient. Thus, a Multi-SIM card technical emerges as required to address this problem.

In a Multi-SIM card service, a user generally possesses multiple cell phone numbers, one of which serves as a primary number corresponding to a subscriber identity module (SIM) card, and others serve as the secondary numbers which may not correspond to a SIM card. Alternatively, the primary number and secondary number information may be stored in a single SIM card. The user utilizes the SIM card with the primary number. He or She can select the primary number or any of the secondary numbers as a calling number, or select the primary number or any of the secondary numbers as a called number.

In a conventional solution, the user selects the primary number or secondary number as an outgoing call number through dialing an additional prefix. The system allocates respective identification information unique to a number selected from the multiple numbers corresponding to a user terminal. When the terminal initiates a call, the identification information corresponding to the number to be used by the calling user is carried in the called number. When receiving the call request, the system obtains the identification information from the called number, searches for the corresponding number based upon the identification information as the calling number to connect the call to the called party. In this solution, when the user selects the primary number or the secondary number, additional identification information shall be carried in the called number. In practical applications, the calling user generally needs to dial additional identification information manually before or following the called number, which is inconvenient for the user and leads to a poor experience of user.

In another conventional solution, the primary number or secondary number is selected as the outgoing call number via mobile menus or prompt tones. This needs modification of the SIM card, and the user has to make a selection from multiple numbers when in use, thus is inconvenient for operation.

### SUMMARY OF THE INVENTION

Embodiments of the invention provide a call processing method and apparatus, thereby a system automatically selects a number attached to a user visited location for call processing when a user ofMulti-SIM card serves as a calling party or called party.

The call processing method provided in the embodiments of the present invention includes: receiving a call request message sent from an originating switch system; searching for a local call identification based on the call request message; and instructing the originating switch system to process the call based on the local call identification if the local call identification is found.

The call processing apparatus provided in the embodiments of the present invention includes: a receiving unit, configured to receive a call request message sent from an originating switch system; a searching unit, configured to search for a local call identification based on the call request message; and an instructing unit, configured to instruct the originating switch system to process the call based on the local call identification when the local call identification is found by the searching unit.

It can be seen that, in the embodiments of the invention, the system automatically searches for the number attached to the visited location of the user of Multi-SIM card for call processing. When the user of Multi-SIM card serves as a called party, the system automatically selects the number attached to the user visited location for call processing, thereby improving experiences of the user.

### BRIEF DESCRIPTION OF THE DRAWINGS

Figure 1 is a networking diagram according to an embodiment of the invention;

Figure 2 is a schematic diagram of a call processing method according to an embodiment of the invention;

Figure 3 is a schematic diagram of a method for processing a calling flow according to an embodiment of the invention;

Figure 4 is an originating call flow chart in the method for processing a calling flow according to an embodiment of the invention;

Figure 5 is an another originating call flow chart in the method for processing a calling flow according to an embodiment of the invention;

Figure 6 is a schematic diagram of a method for processing a called flow according to an embodiment of the invention;

Figure 7 is a terminating call flow chart in the method for processing a called flow according to an embodiment of the invention;

Figure 8 is an another terminating call flow chart in the method for processing a called flow according to an embodiment of the invention;

Figure 9 is a schematic diagram of a call forwarding method according to an embodiment of the invention;

Figure 10 is a flow chart of Call Forwarding Conditional according to an embodiment of the invention;

Figure 11 is a flow chart of Call Forwarding Unconditional according to an embodiment of the invention; and

Figure 12 is a schematic diagram of a call processing apparatus according to an embodiment of the invention.

### DETAILED DESCRIPTION OF THE INVENTION

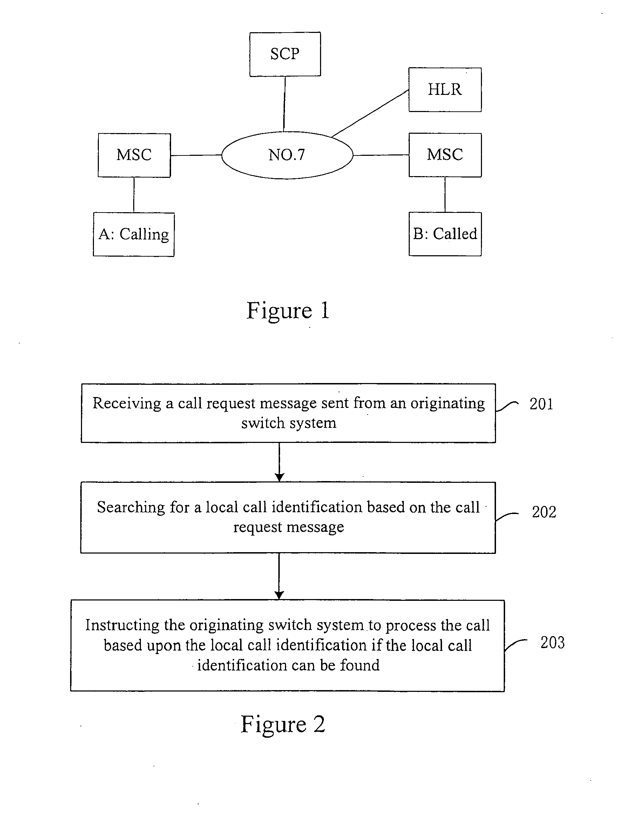

Figure 1 is a networking diagram according to an embodiment of the invention.

In Figure 1, if Multi-SIM card service of a user is provisioned, the relationship between the primary number and the secondary numbers of the user is stored in Service Control Point (SCP) of Intelligent Network, and a default number is recorded. Meanwhile, Originating CAMEL Subscription Information (O-CSI) and Terminating CAMEL Subscription Information (T-CSI) are set for the primary number of the user in the Home Location Register (HLR); and T-CSI is set for all the secondary numbers of the user. The default number may be the primary number, or the secondary number. Usually, the primary number is used as the default number.

Herein, the user of Multi-SIM card includes the case of a SIM card with multiple cell phone numbers, and other cases such as a user with multiple numbers in other forms and email addresses identifying the user.

A call processing method is provided in an embodiment of the invention. As shown in Figure 2, the method includes the following steps:

Step 201: A call request message sent from an originating switch system is received.

The switch system refers to a network system providing users with communication services, which includes: switch devices of the originating end office and terminating end office, such as a Mobile Service Switching Center (MSC) and a Service Switching Point (SSP); switch devices of a conventional wire telephone network such as the Public Switched Telephone Network (PSTN); Softswitch devices; switch devices over Internet; and devices providing related data services, such as the Visitor Location Register, Home Location Register, etc.; and switch systems providing services of transmission of messages including short messages and multimedia messages, and email function.

The call request is a request triggered on the service subscription information of the calling or called party in a call process, for example, for the Multi-SIM card service according to the embodiment of the invention, the call request can be a call request of the Multi-SIM card service triggered by the originating switch system to the SCP when a user of Multi-SIM card serves as the calling party or the called party.

Step 202: A local call identification is searched for based on the call request message.

In this step, if the call request is a call request when the user of Multi-SIM card serves as the calling party, a primary call identification of the user of Multi-SIM card and visited location information of the user of Multi-SIM card are carried in the call request message. In particular, the step includes, based upon the primary call identification, searching for the local call identification attached to the visited location of the user of Multi-SIM card.

If the call request is the call request when the user of Multi-SIM card serves as the called party, it is judged if the terminating call identification carried in the call request message is the primary call identification of the user of Multi-SIM card; if not, obtain the primary call identification of the user of Multi-SIM card based upon the terminating call identification; then obtain the visited location information of the user of Multi-SIM card based upon the primary call identification, and search for the local call identification attached to the visited location of the user of Multi-SIM card.

Here, the visited location generally refers to the place where the switch system visited by the user is located. The local call identification refers to the call identification attached to the user visited location. In the embodiment of the invention, the call identification usually includes cell phone numbers used by the user, numbers identifying users in other forms, email addresses or the like. For example, when the user is registered at location A as a user thereof, the primary call identification is the primary number a; and when the user applies for another number b at location B which has a different switch system from the location A, the number b is bound with the number a of the user, and the number b is generally called as the secondary number. When the user roams from location A to location B to serve as a calling party or called party, location B is the visited location of the user who registers to access the network at location A, and the number b is the local call identification of the user.

Step 203: The originating switch system is instructed to process the call based upon the local call identification if the local call identification is found.

In this step, if the user of Multi-SIM card serves as the calling party, the originating switch system is instructed to connect the calling to a terminating switch system by using the found local call identification of the user of Multi-SIM card, and to use the local call identification as a billing identification of the user of Multi-SIM card.

If the user of Multi-SIM card serves as the called party, the originating switch system is instructed to use the local call identification as the billing identification of the user of Multi-SIM card, and to connect the terminating switch system by using the primary call identification of the user of Multi-SIM card as the called party.

If the local call identification can not be found, the originating switch system is instructed to process the call based on default call identification.

Hereinafter, illustration of the user of Multi-SIM card serving as a calling party, a called party, and a called party with call forwarding will be given. Here, the call identification is the number of the user of Multi-SIM card. The call request is a request for triggering a call processing service of the user of Multi-SIM card implemented by SCP. The end office is the switch system as above.

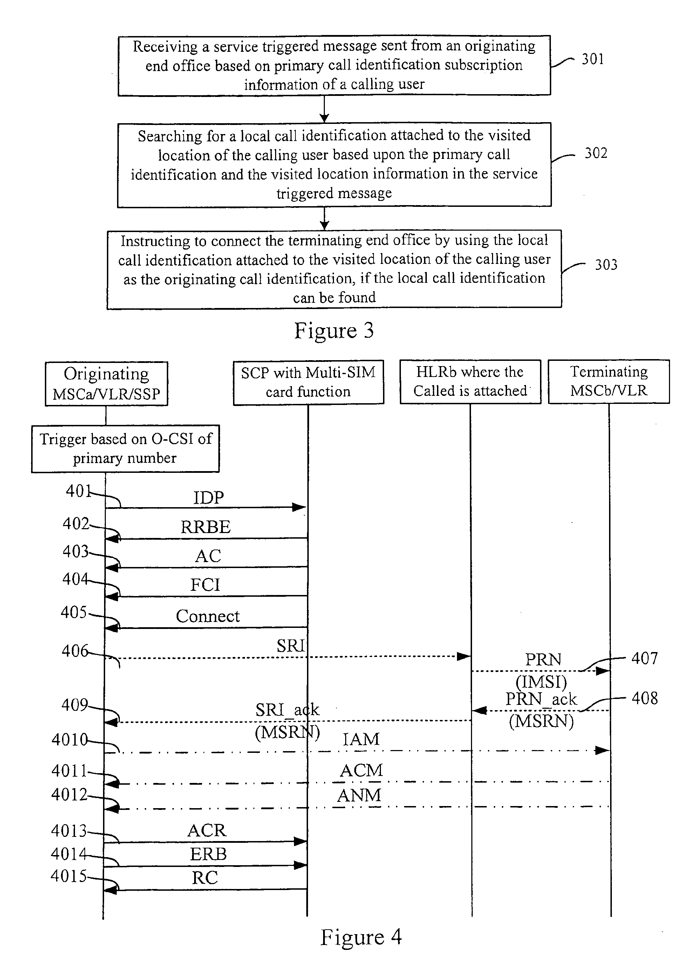

An embodiment of the invention provides a method for processing a calling flow. For example, the method is applied in an Intelligent Network, in which the user of Multi-SIM card serves as the calling party; the end office triggers the calling flow to SCP; SCP searches for the call identification attached to a user visited location based upon the user visited location; if the call identification is found, the call identification is used as an incoming call indication identification (incoming call indication number) and a billing identification; if the call identification is not found, a default call identification is used as the incoming call indication identification and the billing identification. As shown in Figure 3, it includes the following steps.

Step 301: A service triggered message sent from an originating end office based on primary call identification subscription information of a calling user is received.

In this step, the service triggered message is a message triggering an intelligent service sent from the originating end office to SCP, which usually is an Initial Detect Point (IDP) message. When a user of Multi-SIM card as the calling party dials a terminating call identification, the terminal of the calling user sends a call request to the originating end office; and the originating end office triggers an intelligent service flow based on the O-CSI of the primary call identification of the calling user, and sends the IDP message to SCP.

Step 302: A local call identification attached to the visited location of the calling user is searched for based upon the primary call identification and the visited location information in the service triggered message.

In this step, the call identification attached to the visited location can be the primary call identification of the calling user or the secondary call identification of the calling user. If the user accesses the network at the home location of the calling party, what is found is still the primary call identification; if the user roams at a different location, what is found is the secondary call identification attached to the different location.

Step 303: The originating end office is instructed to connect the terminating end office by using the local call identification attached to the visited location of the calling user as the originating call identification, if the local call identification attached to the visited location of the calling user can be found.

In this step, in particular, instructing the originating end office to use the local call identification as an incoming call indication identification when connecting the terminating end office means that, modifying the setting of the incoming call indication identification as the searched call identification attached to the visited location in the transmitted connect message, or instructing the originating end office to use the searched call identification as a billing identification.

If the secondary call identification attached to the user visited location is not found, the originating end office is instructed to use default call identification as the incoming call indication identification, and to charge based on the default call identification. Here, the default call identification can be the primary call identification. Alternatively, the secondary call identification can serve as the account to be charged. It can be seen that, according to the embodiment of the present invention, the technical problem in conventional art that billing is unavailable for multiple numbers can also be solved.

In addition, if the originating end office is instructed to use the secondary call identification (the call identification attached to the visited location of the user in roam) of the user of Multi-SIM card as the call identification for billing, then in particular, instructing the originating end office to use the call identification as a billing identification means that, sending an Apply Charging (AC) message to the originating end office to monitor duration of time, and sending a Furnish Charging Information (FCI) message to eliminate the call detail record (CDR) in the originating end office. The function of the message will be illustrated in detail in the embodiment of the call flow hereinafter.

Thus, the originating end office further connects the terminating end office according to the instruction of SCP to establish the connection between the calling party and the called party.

Additionally, if the user of Multi-SIM card is not in roam, the primary call identification is directly used as the incoming call indication identification and the billing identification. Thus, the primary advantageous effect of the embodiment is embodied in the condition that the user is in roam.

For example, assume the above identifications are cell phone numbers; in an originating call flow, the primary number of the user of Multi-SIM card is number a, the secondary number is number a', and the number of the called user is number b. Hereinafter, for example, the user of Multi-SIM card serves as the calling party at the home location of the secondary number a', the originating signaling flow is shown in Figure 4, which includes the following steps.

Step 401: When the user of Multi-SIM card initiates a call by dialing the called number b at the home location of the secondary number a', MSCa/VLR/SSP at the originating end office triggers a service based on the O-CSI of the primary number of the calling user, and triggers an Intelligent Network service by sending an IDP message to the SCP with Multi-SIM card function.

Here, the SCP with Multi-SIM card function is the SCP capable of processing the Multi-SIM card function.

Steps 402-405: The SCP with Multi-SIM card function searches for the secondary number a' attached to a visited location as the incoming call indication number and a billing number, based on the primary number and the visited location information in the IDP message. In particular, the SCP with Multi-SIM card function sends a RRBE (Request Report BCSM Event), AC, FCI and connect messages, and modifies the incoming call indication number in the connect message to be the secondary number a'. The RRBE message is used by the SCP for instructing the originating end office to concern some Detection Points (DPs), i.e. break points among a series of states of the call; when a DP is met, it means some call event occurs; and if different call branches exist, it just needs to know part of the DPs for a service. The AC message is used by the SCP for obtaining information, such as duration of time, and sending to the MSCa/VLR/SSP of the originating end office for instructing the MSCa/VLR/SSP of the originating end office to bill. The FCI message is used for instructing the MSCa/VLR/SSP of the originating end office to insert a sorting sign in a billing record; Billing is made in SCP where CDR is produced for settlement. However, the end office also produces CDR normally, and the sorting sign is used for sorting out the CDR produced by the end office, which represents billing in this duration of time is made by SCP. The connect message is used for notifying the originating end office to make a corresponding change as the calling or called number changes.

Steps 406-409: The originating MSC obtains the roaming number (MSRN) of the called party from the HLRb where the called number b is attached.

In the steps, SRI message is used for querying routing information by the originating end office from the HLRb where the called party is attached. PRN (IMSI) message is used for requesting for obtaining the MSRN from the terminating end office by the HLRb where the called party is attached. PRN-ACK (MSRN) and SRI-ACK (MSRN) messages, in which MSRN is carried, are respectively return messages of the SRI and PRN messages.

Steps 4010-4012: The call is connected to the terminating MSCb; the called party is ringed, and a ring-back tone is played to the calling party, and both parties are connected to communicate.

In the steps, the originating end office sends an Initial Address Message (IAM) to the terminating end office to connect to the terminating end office. The terminating end office sends an Address Complete Message (ACM) to the originating end office, and the called party starts to ring. Answer Message (ANM) represents the called party makes a response, and both parties are connected to communicate.

Steps 4013-4015: MSCa/VLR/SSP reports the duration of the call to the SCP with Multi-SIM card function, and releases the call when the call is completed.

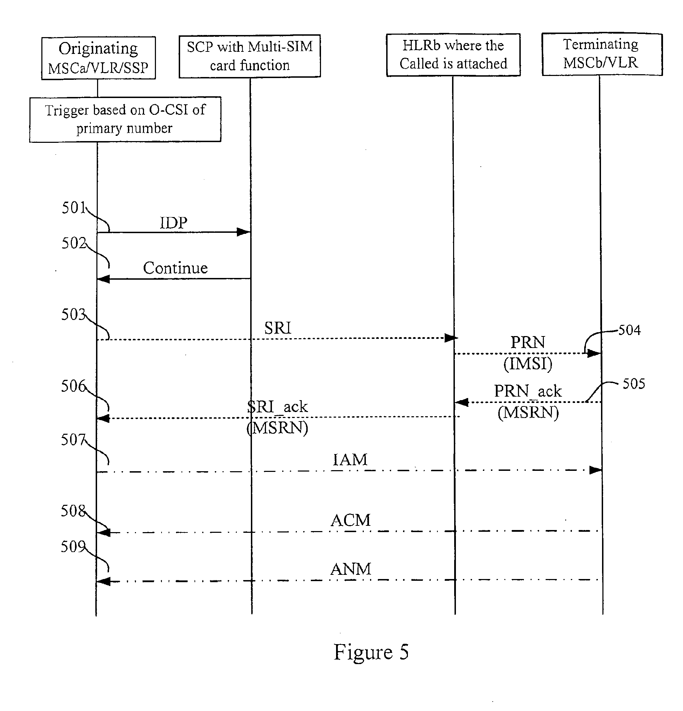

For example, assume the above identifications are cell phone numbers; in another originating call flow, the primary number of the user of Multi-SIM card is number a, the secondary number is number a', and the called number is number b. In this example, the user of Multi-SIM card serves as the calling party at the region beyond the home locations of the primary number a and the secondary number a'; if the secondary number attached to a visited location can not be found at the visited location, a default number is set as the primary number. The signaling interaction is shown in Figure 5, which includes the following steps.

Step 501: When the user of Multi-SIM card initiates a call by dialing the call number b at a region out of the home locations of the primary number a and the secondary number a', the MSCa/VLR/SSP of the originating end office triggers a service via the O-CSI of the primary number of the user, and sends an IDP message to the SCP with Multi-SIM card function.

Step 502: The SCP with Multi-SIM card function searches for the number attached to the visited location based on the primary number and the visited location information in the IDP message. Because the number attached to the visited location does not exist, the default number, i.e. the primary number can be used as an incoming call indication number and a billing number. The SCP with Multi-SIM card function makes the primary number a as the incoming call indication number and the billing number, and instructs the originating end office to connect by sending a continue message.

Steps 503-506: The originating MSC obtains the MSRN of the called party from the HLRb where the called number b is attached.

In the steps, SRI message is used for querying, by the originating end office, routing information from the HLRb where the called party is attached; PRN (IMSI) message is used for requesting for obtaining, by the HLRb where the called party is attached, the MSRN from the terminating end office; and PRN_ACK (MSRN) and SRI-ACK (MSRN), in which MSRN is carried, are respectively the return messages of the above messages.

Steps 507-509: The call is connected to the terminating MSCb from the originating end office. The called party is ringed, and a ring-back tone is played to the calling party, then both parties are connected to communicate.

In the steps, the originating end office sends an Initial Address Message (IAM) to the terminating end office to connect to the terminating end office. The terminating end office sends an Address Complete Message (ACM) to the originating end office, and the called party starts to ring. Answer Message (ANM) represents the called party makes a response, and both parties are connected to communicate.

In addition, if the user of Multi-SIM card makes a call at the home location of the primary number a, what is found is still the primary number a.

It can be seen from the above two flows that, in the embodiment, the number attached to the visited location of the user of Multi-SIM card is queried, and the queried number is used as the incoming call indication number and the billing number when the originating end office connects. It is not necessary for the user to switch to the number attached to the visited location by entering a special prefix number or by using other existing approaches.

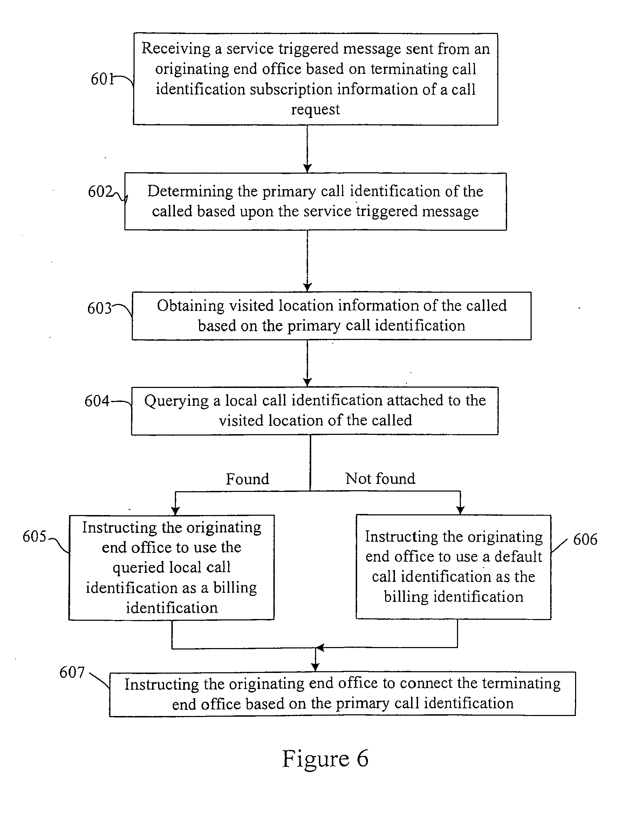

Another embodiment of the invention provides a method for processing a called flow. For example, the method is applied in an Intelligent Network, in which the primary or secondary number of the user of Multi-SIM card serves as the called party; the originating end office triggers the called flow to SCP; SCP searches for the corresponding primary call identification and instructs the originating end office to connect to the primary number. Further, the number attached to the user visited location is to be found based upon the user visited location and used as a billing number; if the number attached to the user visited location is not found, a default number is used as the billing number. As shown in Figure 6, it includes the following steps of:

Step 601: A service triggered message sent from an originating end office based on terminating call identification subscription information of a call request is received.

In this step, the calling user dials the primary call identification or secondary call identification of the user of Multi-SIM card, and the terminal of the calling user sends a call request to the originating end office.

The originating end office triggers an intelligent service flow based on the T-CSI of the terminating call identification, and sends an IDP message to the SCP.

The SCP receives the IDP message sent from the originating end office.

Step 602: The primary call identification of the called is determined based upon the service triggered message.

In this step, the SCP determines if the terminating call identification in the IDP message is the primary call identification of the user of Multi-SIM card; if not, i.e. the terminating call identification is the secondary call identification of the user, the primary call identification of the user of Multi-SIM card is queried based on the secondary call identification.

Step 603: Visited location information of the called party is obtained based on the primary call identification.

In this step, if the terminating call identification in the IDP message is the primary call identification, the SCP obtains the visited location information of the called party based on VLRNumber in the IDP message; and if the terminating call identification in the IDP message is not the primary call identification, the visited location information of the called user is queried from the HLR where the primary call identification is attached based on the primary call identification determined from step 602.

Step 604: A local call identification attached to the visited location of the called is queried.

If the local call identification attached to the visited location of the called party can be found, step 605 is executed, i.e. instructing the originating end office to use the local call identification as a billing identification.

If the local call identification attached to the visited location of the called party can not be found, step 606 is executed, i.e. instructing the originating end office to use default call identification as the billing identification.

Step 607: The originating end office is instructed to connect the terminating end office based on the primary call identification.

In this embodiment, if the call identification for billing is the secondary call identification, the SCP sends an AC message to monitor duration of time, and sends a connect message to instruct the originating end office to connect to the terminating end office based on the primary call identification. In the connect message, a CDR sorting tag is carried for instructing the terminating end office to insert a sorting sign into a billing record. The billing system utilizes the CDR produced by SCP for settlement. However, the end office also produces the CDR normally here, and the billing system sorts out this part based on the CDR sorting tag. Meanwhile, the terminating call identification in the connection message is the primary call identification. If the call identification for billing is the primary call identification, the terminating call identification in the sent connection message is set to be the primary call identification.

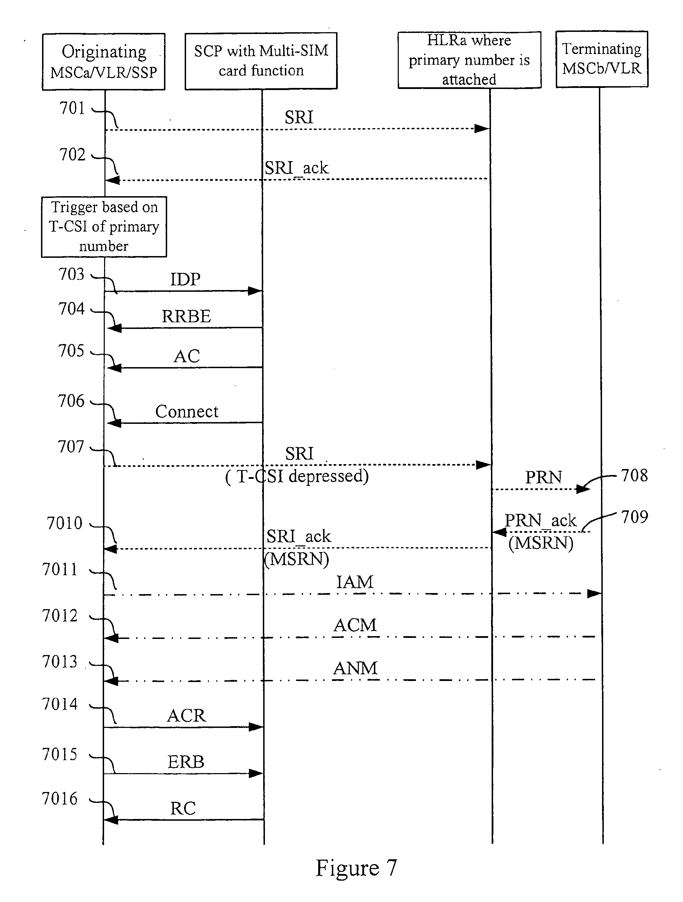

For example, assume the above identifications are cell phone numbers; in a terminating call flow, the primary number of the user of Multi-SIM card is number a, the secondary number is number a', and the calling number is number b. The user of Multi-SIM card is at the home location of the secondary number a', and the primary number serves as the called party. When billing, for example, is made based on the secondary number a', a signaling flow of the called party is shown in Figure 7, which includes the following steps.

Steps 701-702: The user of Multi-SIM card is at the home location of the secondary number a'; the user of the calling number b dials the primary number a of the user of Multi-SIM card; and when the calling terminal initiates a call, MSCb obtains the T-CSI from the HLR of the called number a.

Step 703: The originating end office triggers a service based on the T-CSI of the called number a, and sends an IDP message to the SCP with Multi-SIM card function for processing Multi-SIM card service.

Steps 704-706: The SCP with Multi-SIM card function first determines the called number a in the IDP message is the primary number; then obtains visited location information of the called party based on VLRNumber in the IDP message, and queries the secondary number a' of the user of Multi-SIM card attached to the visited location based on the primary number a and the visited location information. The secondary number a' is used as a billing number. RRBE and AC messages are sent, and a CDR sorting tag is carried in the sent connection message. The called number in the connection message still serves as the primary number.

Steps 707-7010: The originating MSC obtains the MSRN of the called party from the HLRa where the primary number a is attached.

Steps 7011-7013: The originating end office connects the call to the terminating MSCa; the called party is ringed, and a ring-back tone is played to the calling party; then both parties are connected to communicate.

Steps 7014-7016: MSCa/VLR/SSP reports the duration of the call to the SCP with Multi-SIM card function, and releases the call when the communication is completed.

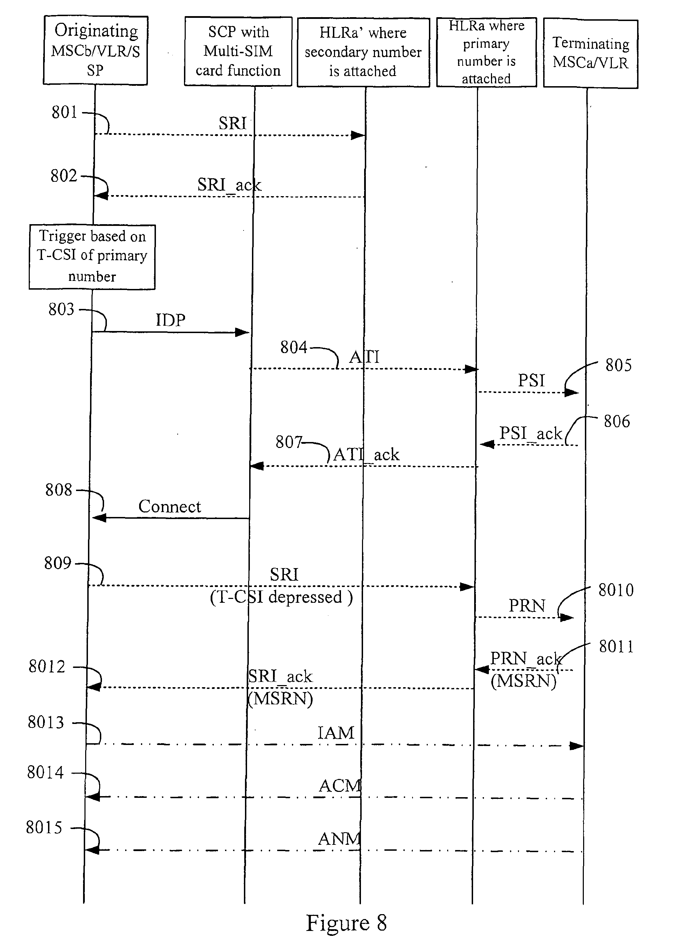

For example, assume the above identifications are cell phone numbers; in another terminating call flow, the primary number of the user of Multi-SIM card is number a, the secondary number is number a', and the calling number is number b. The user of Multi-SIM card is at the home location of the primary number a, and the secondary number serves as the called party. When billing, for example, is made based on the primary number a, a terminating signaling flow is shown in Figure 8, which includes the following steps.

Steps 801-802: The user of Multi-SIM card is at the home location of the primary number a; the user of the calling number b dials the secondary number a' of the user of Multi-SIM card; and when the calling terminal initiates a call, the MSCb/VLR/SSP of the originating end office obtains the T-CSI from the HLRa' where the called number a' is attached.

Step 803: The originating end office triggers a service based on the T-CSI of the called number a', and sends an IDP message to the SCP with Multi-SIM card function.

Steps 804: The SCP with Multi-SIM card function first determines the called number a' in the IDP message is the secondary number; then searched for the primary number a based on the number a'. An Any Time Interrogation (ATI) message is sent to the HLRa where the primary number is attached for querying the location of the terminal of the called user or relevant user information from HLRa.

Step 805: The HLRa where the primary number is attached sends a Provide Subscriber Information (PSI) message to the MSCa/VLR of the terminating end office.

Step 806: The MSCa/VLR of terminating end office returns a response message PSI-ack to the HLRa where the primary number is attached.

Step 807: The HLRa where the primary number is attached returns a response message ATI-ack to the SCP with Multi-SIM card function. VLRNumber is carried in the message for identifying the Visited Location Register (VLR) of the user of Multi-SIM card.

Step 808: The SCP with Multi-SIM card function calculates to obtain visited location information of the user of Multi-SIM card based on the VLRNumber in the response message, and queries the number attached to the visited location based on the visited location information to be the primary number a. The primary number a is used as a billing number, and the called number in the connection message sent to the originating end office is modified to be the primary number.

Steps 809-8012: The originating MSC obtains the MSRN of the called party from the HLR where the primary number a is attached.

Steps 8013-8015: The originating end office connects the call to the terminating MSCa; the called party is ringed, and a ring-back tone is played to the calling party; then both parties are connected to communicate.

In this embodiment, when the user of Multi-SIM card serves as the called party, the system automatically queries the number attached to the user visited location as the billing number without manual switch of the user, thereby improving the experiences of the user.

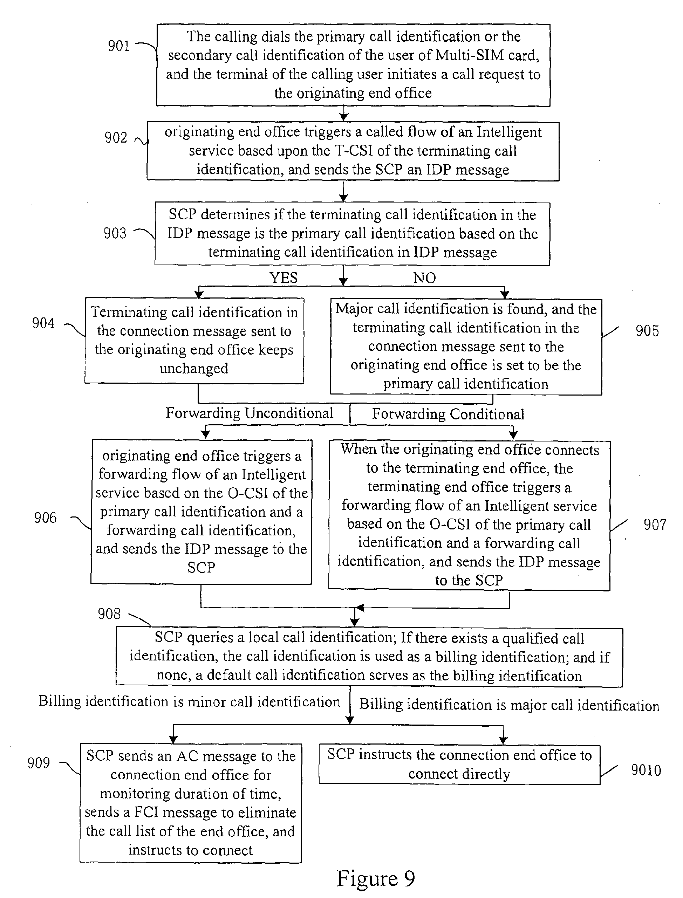

A further embodiment of the invention provides a method for processing call forwarding in a called flow. In this method, the primary or secondary number of the user of Multi-SIM card serves as the called party; the originating end office triggers the called flow to the SCP; and the SCP obtains the primary number of the called party and instructs the originating end office to connect to the primary number. If call forwarding is set for the primary number, a forwarding flow for the primary number is in turn triggered to the SCP; and the SCP searches for the number attached to the user visited location based on the user visited location, and the number serves as a billing number. If the number is not found, a default number serves as the billing number. As shown in Figure 9, the method includes the following steps.

Step 901: The calling party dials the primary call identification or the secondary call identification of the user of Multi-SIM card, and the terminal of the calling user initiates a call request to the originating end office.

Step 902: The originating end office triggers a called flow of an intelligent service based upon the T-CSI of the terminating call identification, and sends the SCP an IDP message.

Step 903: The SCP determines if the terminating call identification in the IDP message is the primary call identification; if the terminating call identification in the IDP message is the primary call identification, step 904 is executed; and if the terminating call identification in the IDP message is not the primary call identification, i.e. it is the secondary call identification, step 905 is executed.

Step 904: The terminating call identification in the connection message sent to the originating end office keeps unchanged.

Step 905: The primary call identification is found, and the terminating call identification in the connection message sent to the originating end office is set to be the primary call identification.

In the event that the terminal is in a Call Forwarding Unconditional state or Call Forwarding on power off state for a considerable long time, for example, in the Call Forwarding on power off state for 24 hours, step 906 is executed; and for other Call Forwarding Conditional states, step 907 is executed.

Step 906: The originating end office triggers a forwarding flow of the intelligent service based on the O-CSI of the primary call identification and forwarding call identification, and sends the IDP message to the SCP.

Step 907: When the originating end office connects to the terminating end office, the terminating end office triggers a forwarding flow of the intelligent service based on the O-CSI of the primary call identification and forwarding call identification, and sends the IDP message to the SCP.

Step 908: The SCP queries local call identification attached to the visited location of the called user based on the primary call identification and the visited location information in the IDP message. If there exists qualified call identification, the call identification is used as a billing identification; and if none, a default call identification serves as the billing identification.

If the billing identification is the secondary call identification, step 909 is executed, i.e. the SCP sends an AC message to the connection end office for monitoring duration of time, sends a FCI message to eliminate the CDR in the end office, and instructs to connect. If the billing identification is the primary call identification, step 9010 is executed, i.e. the SCP instructs the connection end office to connect directly.

In this step, for an unconditional forwarding, the connection end office is the originating end office; for a conditional forwarding (i.e. the called party is to be forwarded in specific states such as in busy, no response, and power off), the connection end office is the terminating end office which connects the forwarding end office.

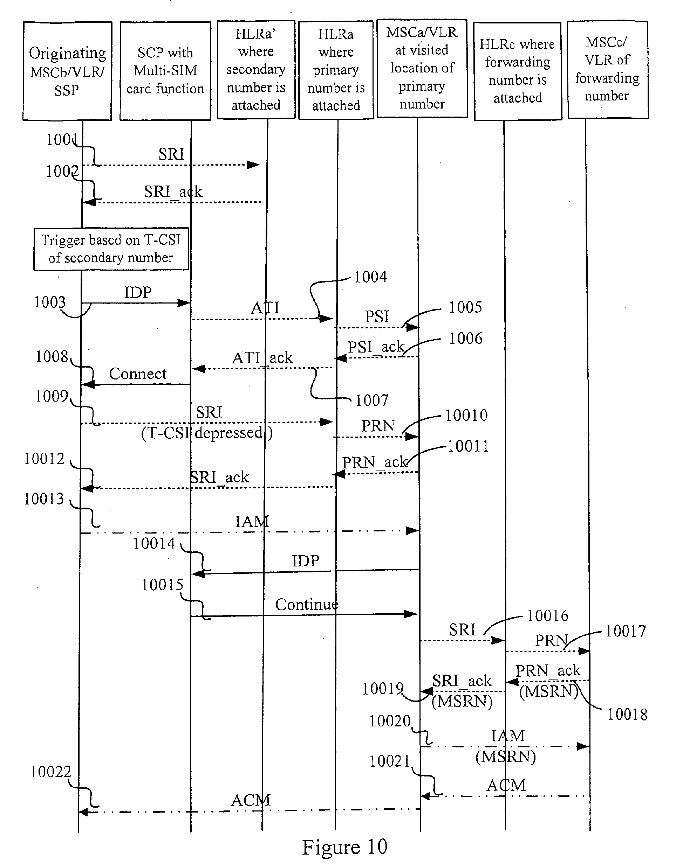

For example, assume the above identifications are cell phone numbers, in a call forwarding flow of the called party, assume the primary number of the user of Multi-SIM card is number a; the secondary number is number a'; the calling number is number b; and the forwarding number is number c. The user of Multi-SIM card is at the home location of the primary number a, and conditional forwarding on busy occurs when the secondary number a' serves as the called number. When billing, for example, is made based on the primary number a, the signaling flow with forwarding is shown in Figure 10, which includes the following steps.

Step 1001-1002: The user of Multi-SIM card is at the home location of the primary number a; the user of the calling number b dials the secondary number a' of the user of Multi-SIM card; and when the calling terminal initiates a call, the MSCb/VLR/SSP of the originating end office obtains the T-CSI from the HLR where the called secondary number a' is attached.

Step 1003: The originating end office triggers a service based on the T-CSI of the called number a', and sends an IDP message to the SCP with Multi-SIM card function.

Step 1004: The SCP with Multi-SIM card function first determines the called number a' in the IDP message is the secondary number; then searched for the primary number a based on the number a'. An Any Time Interrogation (ATI) message is sent to the HLRa where the primary number is attached. The message is used for querying the location of the terminal of the called user or relevant user information from HLRa.

Step 1005: The HLRa where the primary number is attached sends a Provide Subscriber Information (PSI) message to the MSCa/VLR of the end office visited by the primary number.

Step 1006: The MSCa/VLR of the end office visited by the primary number returns a PSI-ack response message to the HLRa where the primary number is attached.

Step 1007: The HLRa where the primary number is attached returns an ATI-aclc response message to the SCP with Multi-message card function.

Step 1008: The SCP with Multi-SIM card function calculates to obtain the visited location information of the user of Multi-SIM card based on the VLRNumber in the ATI-ack response message, and queries the number attached to the visited location based on the visited location information to be the primary number a. The primary number a serves as the billing number, and the called number in the sent connection message is changed to be the primary number a.

Steps 1009-10012: The originating MSC obtains the MSRN of the called party from the HLR where the primary number is attached.

Step 10013: The call is connected to the terminating MSCa, and conditional forwarding on busy occurs.

Step 10014: The terminating end office sends an IDP message to the SCP based on the O-CSI of the primary number and the forwarding number.

Step 10015: If the SCP determines the redirection number a in the IDP message is the primary number, and the searched number attached to the visited location based on the visited location information is the primary number a, then the primary number a is used as a billing number, and a continue message is sent to the MSCa/VLR of the end office at the visited location of the primary number.

Steps 10016-10019: The MSCa/VLR of the end office at the visited location of the primary number obtains the MSRN of the called party from the HLR where the forwarding number is attached.

Steps 10020-10022: The call is connected to the MSCa; a ring-back tone is played to the calling party, and both parties are connected to communicate.

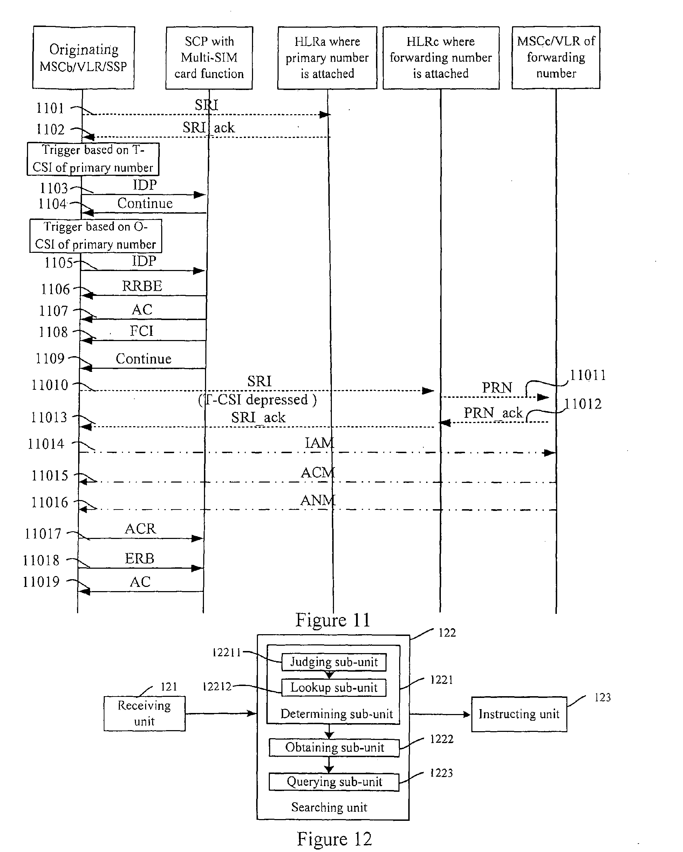

For example, assume the above identifications are cell phone numbers, in another call forwarding flow of the called party, assume the primary number of the user of Multi-SIM card is number a; the secondary number is number a'; the calling number is number b; and the forwarding number is number c. The user of Multi-SIM card is at the home location of the secondary number a', and Call Forwarding Unconditional occurs when the primary number a serves as the called number. When billing, for example, is made based on the secondary number a', the signaling flow is shown in Figure 11, which includes the following steps.

Steps 1101-1102: The user of Multi-SIM card is at the home location of the secondary number a', and the user of the calling number b dials the primary number a of the user of Multi-SIM card; when the terminal of the calling party initiates a call, the MSCbNLR/SSP of the originating end office sends a SRI message to the HLRa where the called number a is attached, and the HLRa where the called number a is attached returns the information, such as the T-CSI of the primary number, O-CSI of the primary number, the forwarding number and VLRNumber of the visited location, to the MSCb/VLR/SSP of the originating end office.

Step 1103: The MSCb/VLR/SSP of the originating end office triggers a service based on the T-CSI of the called number a, and sends an IDP message to the SCP with Multi-SIM card function.

Step 1104: The SCP with Multi-SIM card function determines forwarding occurs based on a forwarding sign, ForwardPending, carried in the IDP message, and sends a continue message to instruct the originating end office to connect.

Step 1105: The MSCb/VLR/SSP triggers a service based on the O-CSI of the called number a and the forwarding number and sends the IDP message to the SCP with Multi-SIM card function.

Steps 1106-1109: The SCP checks that the redirection number a in the IDP message is the primary number, and obtains the visited location information of the called party based on the VLRNumber parameter in the IDP message; then queries the secondary number a' attached to the visited location based on the visited location information. The secondary number a' serves as a billing number. RRBE, AC and FCI messages are sent to the originating end office, and then the continue message is sent to instruct to connect.

Steps 11010-11013: The originating MSCb obtains the MSRN of the called party from the HLR where the forwarding number c is attached. In step 11010, "T-CSI depressed" is an indication for notifying HLR that the MSRN, rather than the T-CSI of the primary number, needs to be returned for this SRI request.

Steps 11014-11019: The call is connected to the MSCc. The calling party is ringed, and both parties are connected to communicate, and the call is released when the communication is completed.

In the case of Call Forwarding Unconditional in this embodiment, the call is forwarded to a target switch system. Billing is still made based on the queried local call identification attached to the visited location of the user of Multi-SIM card, and the connection end office is the originating end office. In case of Call Forwarding Conditional, the connection end office is the terminating end office which connects the forwarding end office so as to forward the call; and billing is made based on the local call identification attached to the visited location of the user of Multi-SIM card. In this way, it may be achieved that the local call identification is used for billing in a call forwarding application, thus improving the experience of the user.

An embodiment of the present invention further provides a call processing apparatus, as shown in Figure 12, including: a receiving unit 121, configured to receive a call request message sent from an originating switch system; a searching unit 122, configured to query a local call identification based on the call request message; and an instructing unit 123, configured to instruct the originating switch system to process the call based on the local call identification, if the local call identification is found by the searching unit 122.

Preferably, the instructing unit 123 is further configured to instruct the originating switch system to process the call based on default call identification, if the local call identification can not be found by the searching unit 122.

Preferably, the searching unit 122 includes: a determining sub-unit 1221, configured to determine primary call identification of the user of Multi-SIM card based upon a terminating call identification carried in the call request message; an obtaining sub-unit 1222, configured to obtain a visited location information of the user of Multi-SIM card based on the primary call identification determined by the determining sub-unit 1221; and a querying sub-unit 1223, configured to query the local call identification attached to the visited location of the user of Multi-SIM card.

Preferably, the determining sub-unit 1221 includes: a judging sub-unit 12211, configured to judge if the terminating call identification is the primary call identification of the user of Multi-SIM card; and a lookup sub-unit 12212, configured to obtain the primary call identification of the user of Multi-SIM card based on the terminating call identification, if the terminating call identification is not the primary call identification of the user of Multi-SIM card.

In the embodiment, the primary number or secondary number of the user of Multi-SIM card is used for call forwarding, which realizes the call forwarding function while billing is made based on the number attached to the user visited location, thus improving the experience of the user.

The embodiments of the present invention described above provide methods for processing a calling flow, a called flow and call forwarding in a called flow, and apparatuses thereof. In the embodiments, when the user of Multi-SIM card serves as the calling party, the system automatically selects an outgoing call number and billing number based on the user visited location without dialing an additional prefix by the user; when the user of Multi-SIM card serves as the called party, the system automatically selects the number attached to the user visited location for billing. In addition, when the user of Multi-SIM card serves as the called party to be forwarded, the system automatically selects the number attached to the user visited location for billing, and connects to the forwarding end office. In this way, the calling flow or the called flow is charged according to the user visited location, which improves the experience of the user.

From the above description of the embodiments, an ordinary skilled in the art can clearly understand that the present invention may be implemented by means of software in combination with a general hardware platform which is necessary. Alternatively, the present invention can also be implemented by hardware, but the former is more preferable. The technical solution of the present invention may be embodied in the form of a software product including several instructions to enable a computer device (such as a personal computer, server, or a network device) to execute the methods according to the embodiments of the present invention which may be stored in a storage medium.

The object, technical solution and advantageous effects of the present invention have been illustrated in detail in the above embodiments. It shall be understood that, the above embodiments are only of illustrative, but not to limit the scope of the present invention. Various modification, equivalent substitutions, and improvements etc. shall be encompassed within the scope of the present invention without departing from the spirit and principle of the present invention.

## Claims

1. A call processing method, **characterized by** comprising:
receiving a call request message sent from an originating switch system;
searching for a local call identification based on the call request message; and
instructing the originating switch system to process the call based on the local call identification if the local call identification is found.

2. The method according to claim 1, **characterized by** further comprising:
instructing the originating switch system to process the call based upon a default call identification if the local call identification is not found.

3. The method according to claim 1, **characterized in that,** the call request is the call request when a user of Multi-SIM card serves as a calling party; and a primary call identification of the user of Multi-SIM card and visited location information of the user of Multi-SIM card are carried in the call request message;
searching for a local call identification based on the call request message comprises: searching for the local call identification attached to the visited location of the user of Multi-SIM card based on the primary call identification of the user of Multi-SIM card;
instructing the originating switch system to process the call based on the local call identification comprises: instructing the originating switch system to use the local call identification as the calling party to connect a terminating switch system.

4. The method according to claim 3, **characterized in that,** instructing the originating switch system to process the call based on the local call identification further comprises:
instructing the originating switch system to use the local call identification as a billing identification of the user of Multi-SIM card to charge the user of Multi-SIM card.

5. The method according to claim 1, **characterized in that,** the call request is the call request when the user of Multi-SIM card serves as a called party; searching for a local call identification based on the call request message comprises:
determining a primary call identification of the user of Multi-SIM card based on a terminating call identification carried in the call request message;
obtaining visited location information of the user of Multi-SIM card based on the primary call identification; and
querying the local call identification attached to the visited location of the user of Multi-SIM card.

6. The method according to claim 5, **characterized in that,** instructing the originating switch system to process the call based on the local call identification comprises:
instructing the originating switch system to use the primary call identification of the user of Multi-SIM card as the called party to connect a terminating switch system.

7. The method according to claim 5, **characterized in that,** instructing the originating switch system to process the call based on the local call identification further comprises:
instructing the originating switch system to use the local call identification as a billing identification of the user of Multi-SIM card.

8. The method according to claim 6, **characterized in that,** determining a primary call identification of the user of Multi-SIM card based on a terminating call identification carried in the call request message comprises:
judging if the terminating call identification is the primary call identification of the user of Multi-SIM card; if the terminating call identification is not the primary call identification of the user of Multi-SIM card, obtaining the primary call identification of the user of Multi-SIM card based on the terminating call identification.

9. The method according to claim 8, **characterized in that,** obtaining visited location information of the user of Multi-SIM card based on the primary call identification comprises:
if the terminating call identification is the primary call identification of the user of Multi-SIM card, obtaining the visited location information of the user of Multi-SIM card based on a Visited Location Register number carried in the call request message; and
if the terminating call identification is not the primary call identification of the user of Multi-SIM card, obtaining the visited location information of the user of Multi-SIM card based on a Home Location Register of the primary call identification of the user of Multi-SIM card obtained from the terminating call identification.

10. The method according to claim 6, **characterized in that,** if a unconditional forwarding identification is carried in the call request message, instructing the originating switch system to process the call based on the local call identification comprises:
instructing the originating switch system to use the local call identification as a billing identification of the user of Multi-SIM card; and
instructing the originating switch system to use the calling number to connect a forwarding switch system.

11. The method according to claim 7, **characterized in that,** if the user of Multi-SIM card is forwarded conditionally, instructing the originating switch system to use the primary call identification of the user of Multi-SIM card as the called party to connect a terminating switch system further comprises:
instructing the switch system of the primary call identification of the user of Multi-SIM card to connect a forwarding switch system.

12. A call processing apparatus, **characterized by** comprising:
a receiving unit, adapted to receive a call request message sent from an originating switch system;
a searching unit, adapted to search for a local call identification based on the call request message; and
an instructing unit, adapted to instruct the originating switch system to process the call based on the local call identification when the local call identification is found by the searching unit.

13. The apparatus according to claim 12, **characterized in that,** the instructing unit is further adapted to instruct the originating switch system to process the call based on a default call identification, if the local call identification is not found by the searching unit.

14. The apparatus according to claim 12, **characterized in that**, the searching unit further comprises:
a determining sub-unit, adapted to determine a primary call identification of the user of Multi-SIM card based upon a terminating call identification carried in the call request message;
an obtaining sub-unit, adapted to obtain a visited location information of the user of Multi-SIM card based on the primary call identification determined by the determining sub-unit; and
a querying sub-unit, adapted to query the local call identification attached to the visited location of the user of Multi-SIM card.

15. The apparatus according to claim 14, **characterized in that,** the determining sub-unit comprises:
a judging sub-unit, adapted to judge if the terminating call identification is the primary call identification of the user of Multi-SIM card; and
a lookup sub-unit, adapted to obtain the primary call identification of the user of Multi-SIM card based on the terminating call identification, if the terminating call identification is not the primary call identification of the user of the Multi-number call.
